# EUROPÄISCHE PATENTSCHRIFT

(11) **EP 0 709 244 B1**
(45) Veröffentlichungstag und Bekanntmachung des Hinweises auf die Patenterteilung: **29.07.1998**
(21) Anmeldenummer: 95113822.1
(22) Anmeldetag: 02.09.1995
(51) Int. Cl.: B60J 7/16

(54) **Dachluke für Grossraumfahrzeuge, wie Omnibusse**
Roof hatch for utility vehicules, such as buses
Trappe pour toit de véhicules utilitaires, comme autobus

(30) Priorität: 25.10.1994 DE 4437983; 10.12.1994 DE 4444038
(43) Veröffentlichungstag der Anmeldung: 01.05.1996
(73) Patentinhaber: HAPPICH Fahrzeug- und Industrieteile GmbH, 42285 Wuppertal (DE)
(72) Erfinder: Ackermann, Werner, D-56332 Alken / Mosel (DE); Römer, Hans-Herward, D-42115 Wuppertal (DE)

(56) Entgegenhaltungen:
- EP-A- 0 347 958
- DE-C- 4 011 902
- DE-C- 4 313 555

## Beschreibung

Die Erfindung bezieht sich auf eine Dachluke für Großraumfahrzeuge, wie Omnibusse, mit einem inneren rechteckigen Lukenrahmen, einem äußeren rechteckigen Lukenrahmen, einem rechteckigen aus einer Sicherheitsglasscheibe bestehenden Lukendeckel, einem Dichtrahmen zwischen dem äußeren Lukenrahmen und dem Lukendeckel und Mitteln zur Halterung des Lukendeckels am äußeren Lukenrahmen, die aus zwei jeweils an den Schmalseiten des Lukendeckels und des äußeren Lukenrahmens befestigten manuell oder elektromotorisch betätigbaren Ausstellern bestehen.

Eine Dachluke der gattungsgemäßen Art ist durch die DE-A-4 011 902 bekannt geworden. Die bekannte Dachluke weist eine vereinfachte Notbetätigung auf, die sowohl von innen als auch von außen zu bedienen ist. Dabei ist eine Trennung des Lukendeckels vom fahrzeugfesten Lukenrahmen zwecks Bildung einer Notausstiegsluke und weiterhin vorgesehen, daß eine Notentriegelungseinrichtung den Lukendeckel vom Lukenrahmen im Bereich beider Schwenklagerungen über eine Betätigungseinrichtung trennt, welche sowohl vom Fahrzeuginnenraum als auch von außen betätigbar ist.

Dachluken sind zudem in den unterschiedlichsten Ausführungsformen bekanntgeworden. Sie dienen in der einfachsten Ausführungsform der besseren Fahrzeugausleuchtung, in einer verbesserten Ausführungsform der Fahrzeugbelüftung (DE-A-21 58 430) und in einer weiteren Ausführungsform auch als Notausstieg (DE-A-1 630 020). Jede herkömmliche Dachluke bildet eine konstruktive Baueinheit, die keine Abwandlungen zuläßt.

Der vorliegenden Erfindung liegt die Aufgabe zugrunde, eine Dachluke zu schaffen, die unter Verwendung von stets baugleichen Basiselementen, nämlich einem inneren und einem äußeren Lukenrahmen und einem Lukendeckel sowohl zur Fahrzeugbelüftung als auch als Notausstieg dienen kann, wobei sich die Dachluke noch durch einen relativ einfachen und kostengünstigen Aufbau, ein formschönes Aussehen, eine hohe Funktionssicherheit und nicht zuletzt dadurch auszeichnen soll, daß sie ohne eine aufwendige Notentriegelungseinrichtung auskommt.

Zur Lösung dieser Aufgabe ist erfindungsgemäß vorgesehen, daß unterhalb des Lukendeckels ein Innendeckel angeordnet ist, daß der Innendeckel zwischen dem Lukendeckel und den beiden Ausstellern eingeklemmt ist und daß der Innendeckel eine fensterartige, den Lukendeckel für einen Angriff mittels eines Nothammers zugänglich machende Öffnung aufweist.

Die Erfindung bietet besondere Vorteile. So kann die Dachluke aufgrund der vorgesehenen Aussteller für Belüftungszwecke geöffnet und auf Wunsch hin wieder geschlossen werden. Insbesondere vermag aber die erfindungsgemäße Dachluke auch ihre angestrebte Notausstiegsfunktion zu erfüllen. Hierzu dient zum einen die Maßnahme den Lukendeckel als Sicherheitsglasscheibe (ESG-Scheibe) auszubilden, wobei unter einer Sicherheitsglasscheibe eine solche verstanden werden soll, die bei einer harten Schlagbeanspruchung völlig zersplittert bzw. in Glaspartikel zerfällt. Hierzu ist ein Schlag mit einem eine harte Spitze aufweisenden Nothammer im allgemeinen ausreichend. Der unterhalb der Sicherheitsglasscheibe angeordnete Innendeckel hat zunächst die Funktion zu erfüllen, einen oftmals unerwünschten Lichteinfall ins Fahrzeuginnere zu verhindern darüber hinaus soll er aber auch beim etwa notwendig werdenden Zerstören der Sicherheitsglasscheibe dazu dienen, die Glaspartikel aufzufangen. Um Mittels eines Nothammers überhaupt den aus einer Sicherheitsglasscheibe gebildeten Lukendeckel vom Fahrzeuginnern her beaufschlagen zu können, ist die fensterartige Öffnung im Innendeckel vorgesehen. Der Innendeckel ist durch bloßes Einklemmen zwischen dem Lukendeckel und den Ausstellern gehalten. Diese Halterung geht augenblicklich dann verloren, wenn der Lukendeckel zerstört wird. Frei jeglicher Halterung kann also der Innendeckel zusammen mit den aufgefangenen Glaspartikeln nach außen abgeworfen und der Notausstieg freigemacht werden. Ein Herunterfallen des Innendeckels ins Fahrzeuginnere wird durch seine Auflage auf den Ausstellern verhindert. Bei der erfindungsgemäßen Dachluke können mechanische Verriegelungs- und auch Diebstahlsicherungssysteme entfallen, was zu einer Gewichts- und Kostenreduzierung führt.

Um im Notfall einen für das Freimachen des Notausstiegs erforderlichen Nothammer unmittelbar zur Verfügung zu haben, ist gemäß einer Ausgestaltung der Erfindung vorgesehen, daß in der Öffnung im Innendeckel ein Nothammer gehaltert ist.

Eine bevorzugte Weiterbildung der Erfindung besteht darin, daß die Öffnung im Innendeckel durch ein im Bedarfsfall leicht öffenbares Abdeckelement verschlossen ist. Ein solches z. B. als Kunststoff-Spritzgußteil ausgebildetes Abdeckelement kann über angeformte Klipsnasen oder dgl. leicht am Innendeckel befestigt aber auch ebenso schnell und einfach wieder von diesem gelöst werden um den Nothammer wie auch den Lukendeckel zugänglich zu machen. Das Abdeckelement kann auch mit Aufdrucken oder Aufklebern versehen sein, die durch Symbole oder Beschriftungen aufzeigen, was im Notfall zu geschehen hat.

Ein Ausführungsbeispiel der Erfindung wird nachfolgend anhand der Zeichnungen näher erläutert, und es zeigen:

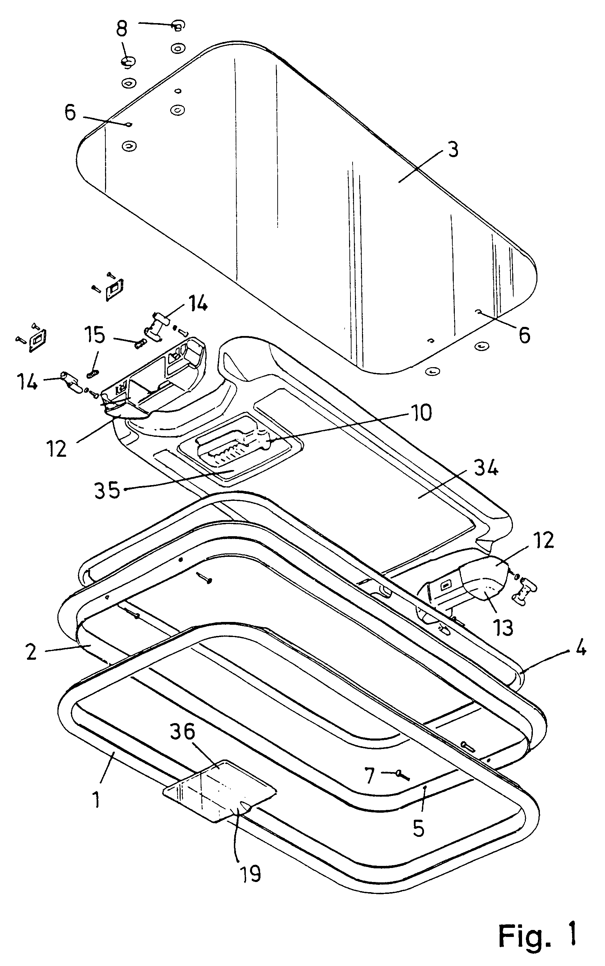

- Fig. 1: eine schaubildliche Explosivdarstellung der Dachluke,

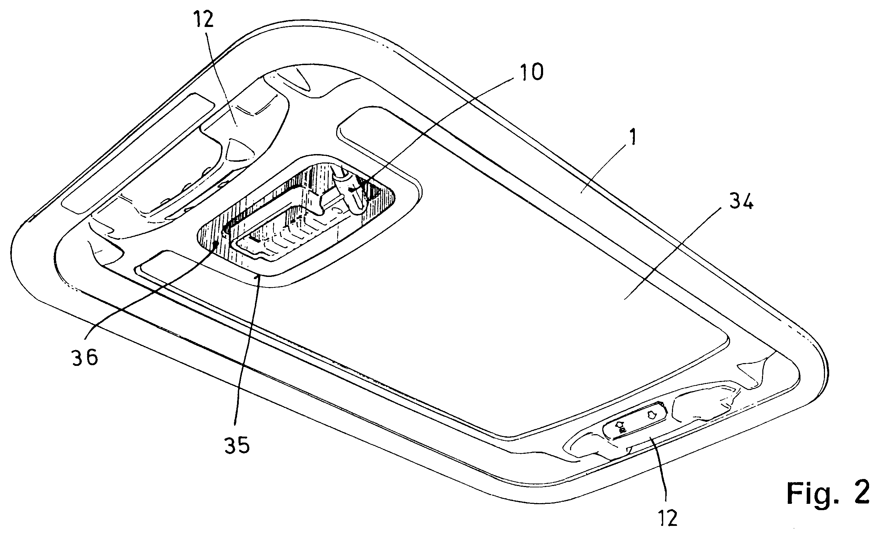

- Fig. 2: die Dachluke nach Fig. 1 in der zusammengebauten Einbaulage und
- Fig. 3: fünf Schritte, die im Notfall zur Freigabe des Notausstiegs durchzuführen sind.

Die Hauptbauelemente der Dachluke sind ein innerer Lukenrahmen 1, ein äußerer Lukenrahmen 2, ein Lukendeckel 3, ein Dichtrahmen 4 zwischen dem äußeren Lukenrahmen 2 und dem Lukendeckel 3 sowie ein Innendeckel 34. Der innere Lukenrahmen 1 kann aus Kunststoff und der äußere Lukenrahmen 2 aus Aluminium bestehen. Der Dichtrahmen 4 kann ein Hohlkammerprofil aus Gummi oder Kunststoff sein und der Lukendeckel 3 besteht aus einer Glasplatte.

Im äußeren Lukenrahmen 2 und im Lukendeckel 3 befinden sich an jeweils gleicher Stelle Schraubenlöcher 5 und 6 für Befestigungsschrauben 7 und 8.

Für die Befestigungsschrauben 8 sind Unterleg- und Dichtungsscheiben vorgesehen.

Der aus einer Sicherheitsglasscheibe gebildete Lukendeckel 3 ist mit dem äußeren Lukenrahmen 2 über manuell oder elektromotorisch betätigbare Aussteller 12 verbunden. Die Aussteller 12 umfassen jeweils ein Ausstellergehäuse 13, zwei Hebel 14 und zwei die Hebel 14 belastende Federn 15.

Unterhalb des Lukendeckels 3 ist der sich planparallel zu diesem erstreckende Innendeckel 34 angeordnet und durch Einklemmen zwischen dem Lukendeckel 3 und den daran befestigen Ausstellern 12 gehaltert. Der Innendeckel 34, der als Blech- oder Kunststoff-Formteil ausgebildet sein und auf der Sichtseite eine nicht gezeigte Dekorkaschierung tragen kann, besitzt eine Öffnung 35, deren Öffnungsränder so gestaltet sind, daß ein Nothammer 10 daran eine leicht lösbare Halterung findet.

Die Öffnung 35 im Innendeckel 34 ist durch ein auch den Nothammer 10 abdeckendes Abdeckelement 36 verschlossen. Das als Blech- oder Kunststoff-Formteil ausgebildete Abdeckelement 36 ist zweckmäßigerweise über nicht näher dargestellte Klipselemente mit dem Innendeckel 34 verbunden und daher schnell und einfach montierbar und demontierbar. Die Demontage erfolgt dabei durch Abziehen des Abdeckelements 36 vom Innendeckel 34, was durch eine Griffmulde 19 am Abdeckelement 36 erleichtert wird. Die Griffmulde 19 kann natürlich auch durch einen im Abdeckelement 36 ausgebildeten Öffnungsschlitz (nicht gezeigt) ersetzt werden. Das Abdeckelement 36 kann je nach Kundenwunsch durchsichtig oder undurchsichtig sein und auch Aufdrucke oder Aufkleber tragen.

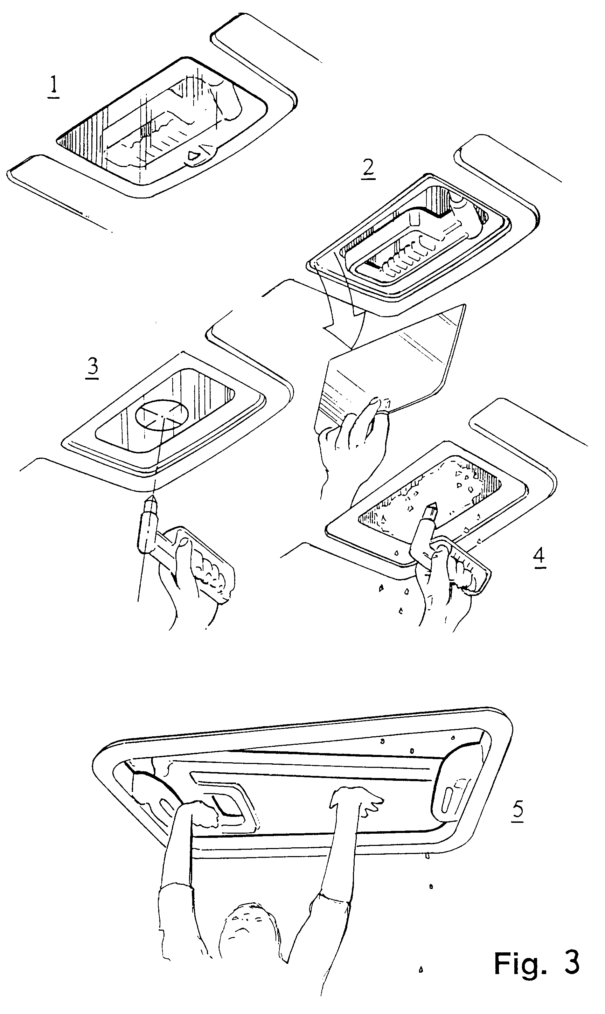

Im Notfall kann die Dachluke als Notausstieg benutzt werden. In Fig. 3 sind die hierfür erforderlichen Schritte in mit den Ziffern 1 bis 5 bezeichneten Einzeldarstellungen gezeigt. Die Ziffer 1 soll verdeutlichen, durch Beschriftung oder durchsichtige Ausbildung des Abdeckelements 36, daß sich hier ein Nothammer 10 befindet. Die Ziffer 2 läßt das Entfernen des Abdeckelements 36 vom Innendeckel 34 erkennen. Die Ziffer 3 zeigt an, daß der Lukendeckel 3 durch die Öffnung 35 hindurch mit dem Nothammer 10 zerschlagen werden kann. Die Ziffer 4 zeigt das Ergebnis der Zerstörung und Ziffer 5 schließlich das Abwerfen des Innendeckels 34 mit den aufgefangenen Glaspartikeln an.

## Patentansprüche

1. Dachluke für Großraumfahrzeuge wie Omnibusse, mit einem inneren rechteckigen Lukenrahmen (1), einem äußeren rechteckigen Lukenrahmen (2), einem rechteckigen aus einer Sicherheitsglasscheibe bestehenden Lukendeckel (3), einem Dichtrahmen (4) zwischen dem äußeren Lukenrahmen (2) und dem Lukendeckel (3) und Mitteln zur Halterung des Lukendeckels (3) am äußeren Lukenrahmen (2), die aus zwei jeweils an den Schmalseiten des Lukendeckels (3) und des äußeren Lukenrahmens (2) befestigten manuell oder elektromotorisch betätigbaren Ausstellern (12) bestehen, dadurch gekennzeichnet, daß unterhalb des Lukendeckels (3) ein Innendeckel (34) angeordnet ist, daß der Innendeckel (34) zwischen dem Lukendeckel (3) und den beiden Ausstellern (12) eingeklemmt ist und daß der Innendeckel (16) eine fensterartige, den Lukendeckel (3) für einen Angriff mittels eines Nothammers (10) zugänglich machende Öffnung (35) aufweist.

2. Dachluke nach Anspruch 1, dadurch gekennzeichnet, daß in der Öffnung (35) im Innendeckel (34) ein Nothammer (10) gehaltert ist.

3. Dachluke nach Anspruch 1 oder 2 dadurch gekennzeichnet, daß die Öffnung (35) im Innendeckel (34) durch ein im Bedarfsfall leicht öffenbares Abdeckelement (36) verschlossen ist.

## Claims

1. Roof hatch for large-capacity vehicles such as buses, having an inner rectangular hatch frame (1), having an outer rectangular hatch frame (2), having a rectangular hatch cover (3) comprising a safety glass pane, having a sealing frame (4) between the outer hatch frame (2) and the hatch cover (3), and having means which are intended for retaining the hatch cover (3) on the outer hatch frame (2) and comprise two adjusters (12) which are each fastened on the narrow sides of the hatch cover (3) and of the outer hatch frame (2) and can be actuated manually or by an electric motor, characterized in that an inner cover (34) is arranged beneath the hatch cover (3), in that the inner cover (34) is clamped in between the hatch cover (3) and the two adjusters (12), and in that the inner cover (34) has a window-like opening (35) which renders the hatch cover (3) accessible to the action of an emergency hammer (10).

2. Roof hatch according to Claim 1, characterized in that an emergency hammer (10) is retained in the opening (35) in the inner cover (34).

3. Roof hatch according to Claim 1 or 2, characterized in that the opening (35) in the inner cover (34) is closed by a covering element (36), which can be easily opened if required.

## Revendications

1. Trappe d'accès pour toit de véhicules de grand volume, tels que des autobus, munie d'un cadre (1) de trappe d'accès rectangulaire interne, d'un cadre (2) de trappe d'accès rectangulaire externe, d'un couvercle (3) de trappe d'accès rectangulaire constitué d'une vitre de sécurité, d'un cadre d'étanchéité (4) entre le cadre (2) de trappe d'accès externe et le couvercle (3) de trappe d'accès, et de moyens de fixation du couvercle (3) de trappe d'accès sur le cadre (2) de trappe d'accès externe, qui se composent de deux organes d'ouverture (12) actionnables manuellement ou par force électromotrice, fixées respectivement au niveau des petits côtés du couvercle (3) de trappe d'accès et du cadre (2) de trappe d'accès externe, caractérisée en ce qu'en dessous du couvercle (3) de trappe d'accès est disposé un couvercle intérieur (34), en ce que le couvercle intérieur (34) est serré entre le couvercle (3) de trappe d'accès et les deux organes d'ouverture (12) et en ce que le couvercle intérieur (34) présente une ouverture (35) en forme de fenêtre, permettant d'accéder au couvercle (3) de trappe d'accès pour le briser au moyen d'un marteau de secours (10).

2. Trappe d'accès pour toit selon la revendication 1, caractérisée en ce qu'un marteau de secours (10) est fixé dans l'ouverture (35) dans le couvercle intérieur (34).

3. Trappe d'accès pour toit selon la revendication 1 ou 2, caractérisée en ce que l'ouverture (35) dans le couvercle intérieur (34) est fermée par un élément de recouvrement (36) pouvant être facilement ouvert en cas de besoin.
